# EUROPÄISCHE PATENTSCHRIFT

(11) **EP 3 374 891 B1**
(45) Veröffentlichungstag und Bekanntmachung des Hinweises auf die Patenterteilung: **28.07.2021**
(21) Anmeldenummer: 16781282.5
(22) Anmeldetag: 19.09.2016
(51) Int. Cl.: G06F 30/00, G06F 111/02

(54) **VERFAHREN ZUR ENTWICKLUNG EINER BAUGRUPPE, DIE MINDESTENS EINE MECHATRONISCHE KOMPONENTE AUFWEIST, UND EINE ENTSPRECHENDE ANORDNUNG**
METHOD FOR DEVELOPING AN ASSEMBLY WHICH HAS AT LEAST ONE MECHATRONIC COMPONENT, AND A CORRESPONDING ARRANGEMENT
PROCÉDÉ POUR DÉVELOPPER UN ENSEMBLE, COMPORTANT AU MOINS UN COMPOSANT MÉCATRONIQUE, ET DISPOSITIF CORRESPONDANT

(30) Priorität: 11.11.2015 DE 102015119414
(43) Veröffentlichungstag der Anmeldung: 19.09.2018
(73) Patentinhaber: EPLAN Software & Service GmbH & Co. KG, 40789 Monheim am Rhein (DE); CIDEON SOFTWARE & SERVICES GMBH & CO. KG, 82166 Gräfelfing (DE)
(72) Erfinder: LISSE, Rolf, 51381 Leverkusen (DE); WULFF, Gerhard, 42781 Haan (DE); PAULFEUERBORN, Arnd, 45259 Essen (DE)
(74) Vertreter: Angerhausen, Christoph
(86) Internationale Anmeldenummer: PCT/DE2016/100435
(87) Internationale Veröffentlichungsnummer: WO 2017/080543

(56) Entgegenhaltungen:
- US-B2- 6 721 614

## Beschreibung

Die Erfindung geht aus von einem Verfahren zur Entwicklung einer Baugruppe, die mindestens eine mechatronische Komponente mit einem mechanischen Anteil, einem elektrotechnischen Anteil und einem informationstechnischen Anteil aufweist.

Die DE 10 2010 043 405 A1 beschreibt ein Planungsverfahren für ein mechatronisches System, das mehrere mechatronische Einheiten aufweist, wobei für jede mechatronische Einheit eine Mechatronikeinheit-Datenstruktur gespeichert ist, wobei die Machatronikeinheit-Datenstruktur Informationen über die jeweilige mechatronische Einheit aufweist. Es ist eine Prozessablauf-Datenstruktur vorgesehen, welche Informationen über den Prozessablauf des mechatronischen Systems umfasst. Dieser weist die Schritte auf: a) Auswählen von mindestens zwei Mechatronikeinheit-Datenstrukturen basierend auf der Prozessablauf-Datenstruktur; b) automatisches Erstellen einer Hierarchie der ausgewählten Mechatronikeinheit-Datenstruktur basierend auf der Prozessablauf-Datenstruktur, wobei die MechatronikeinheitDatenstruktur in übergeordnete und untergeordnete Mechatronikeinheit-Datenstrukturen gegliedert werden; c) Bereitstellen von Schnittstellen in den ausgewählten übergeordneten Mechatronikeinheit-Datenstrukturen basierend auf den in den untergeordneten Mechatronikeinheit-Datenstrukturen angeordneten Schnittstellen; und d) Festlegen einer Zuordnung jeder der bereitgestellten Schnittstellen der übergeordneten Mechatronikeinheit-Datenstrukturen zu den Schnittstellen der jeweils untergeordneten Mechatronikeinheit-Datenstrukturen, wobei die Zuordnung in der übergeordneten und/oder der jeweiligen untergeordneten Mechatronikeinheit-Datenstruktur gespeichert wird.

Dokument US 6 721 614 B2 offenbart ein computerimplementiertes Verfahren zum Austausch von Entwicklungsständen zwischen Autorensystemen, wobei ein erstes Autorensystem zum Entwickeln des mechanischen Anteils auf einem ersten Computersystem installiert ist, ein zweites Autorensystem zum Entwickeln des elektrotechnischen Anteils auf einem zweiten Computersystem installiert ist und ein drittes Autorensystem zum Entwickeln des informationstechnischen Anteils auf einem dritten Computersystem installiert ist. Der Datenaustausch geschieht dabei über eine multidisziplinäre universelle CAD Bibliothek.

Die aus dem Stand der Technik bekannten Verfahren haben den Nachteil, dass die Entwicklung des mechanischen Anteils, des elektrotechnischen Anteils und des informationstechnischen Anteil in parallel nebeneinander laufenden Entwicklungsprozessen völlig unabhängig voneinander erfolgt, was insbesondere den Nachteil hat, dass sich für die Entwicklung eines ersten Anteils aus der Entwicklung eines zweiten Anteils ergebende Anforderungen nur bedingt und insbesondere stark zeitverzögert berücksichtigt werden können.

Es ist daher die Aufgabe der Erfindung, ein Verfahren zur Entwicklung einer eine mechatronische Komponente aufweisenden Baugruppe vorzuschlagen, welches den disziplinübergreifenden Entwicklungsaufwand minimiert und insbesondere die Entwicklungszeiten in den einzelnen Entwicklungsdisziplinen minimiert.

Diese Aufgabe wird durch ein Verfahren mit den Merkmalen des Anspruchs 1 gelöst. Die abhängigen Ansprüche betreffen jeweils vorteilhafte Ausführungsformen.

Demgemäß weist das Verfahren die Schritte auf:
- Entwickeln des mechanischen Anteils, des elektrotechnischen Anteils und des informationstechnischen Anteils in voneinander getrennten Entwicklungsprozessen;
- kontinuierliches oder periodisches Kommunizieren einer Entwicklungsstandinformation des Entwicklungsprozesses zumindest eines ersten der Anteile an den Entwicklungsprozess eines zweiten der Anteile oder an die Entwicklungsprozesse der beiden verbleibenden Anteile; und
- Variieren des Entwicklungsprozesses des zweiten der Anteile oder der Entwicklungsprozesse beider verbleibender Anteile unter Berücksichtigung der Entwicklungsstandinformation.

Durch das kontinuierliche oder periodische Kommunizieren mindestens einer Entwicklungsstandsinformation der Entwicklungsprozesse der Anteile untereinander kann gewährleistet werden, dass die grundsätzlich unabhängig voneinander verlaufenden Entwicklungsprozesse der Anteile besser aufeinander abgestimmt werden und insbesondere Änderungen in einem der Anteile im Wesentlichen ohne zeitliche Verzögerung an die Entwicklungsprozesse der anderen Anteile kommuniziert werden können, um dort gegebenenfalls auf diese Änderungen entwicklungsseitig reagieren zu können, sofern die kommunizierte Änderung eines ersten Anteils Einfluss auf die Entwicklung eines zweiten Anteils hat.

Bei komplexen mechatronischen Komponenten kann es vorgesehen sein, dass diese in funktionale Untergruppen strukturiert werden, die in jeweils voneinander unabhängigen Entwicklungszyklen entwickelt werden können. Dabei kann vorgesehen sein, dass mit Hilfe einer Bedarfsanalyse festgestellt wird, welche Anteile die zu entwickelnde Unterkomponente aufweist und dementsprechend welche Entwicklungsprozesse (mechanisch, elektronisch oder informationstechnisch) beteiligt werden müssen.

Die Datenstruktur kann eine Struktur sein, die unabhängig von den Autorensystemen und individuell auf das zu entwickelnde mechatronische Produkt, bzw. einen bestimmten Engineering-Prozess eines Benutzers angepasst ist. Die Struktur kann anforderungsorientiert oder funktionsorientiert sein, wobei sie insbesondere bei Serienfertigem komponentenorientiert oder prozessorientiert sein kann.

Das Verfahren kann weiterhin die Schritte aufweisen:
- Erstellen eines Anforderungsprofils aus einer Mehrzahl Einzelanforderungen an die zu entwickelnde mechatronische Komponente;
- Qualifizieren jeder der Einzelanforderungen danach, ob sie Einfluss auf die Entwicklung des mechanischen Anteils, des elektrotechnischen Anteils, des informationstechnischen Anteils, oder mehrerer dieser Anteile hat; und
- Hinterlegen des Anforderungsprofils und eines Ergebnisses der Qualifizierung in einer Datenbank und Bereitstellen des Anforderungsprofils und des Qualifizierungsergebnisses jeweiligen Autorensystemen für die Entwicklung der Anteile über die Datenbank.

In der Datenbank kann weiterhin ein Entwicklungsstand des mechanischen Anteils, des elektroetchnischen Anteils und/oder des informationstechnischen Anteils und eine Bewertung, ob der jeweilige Entwicklungsstand mindestens eine der Einzelanforderungen erfüllt, hinterlegt werden.

Die voneinander getrennten Entwicklungsprozesse können mithilfe voneinander unabhängiger Autorensysteme durchgeführt werden, wobei die Autorensysteme die Entwicklungsstandinformation über eine Schnittstelle und/oder ein Gateway untereinander austauschen.

Die Autorensysteme können beispielsweise gängige CAD-Systeme sein. Die Autorensysteme können weiterhin ausschließlich in Software implementiert sein. Dabei können die Autorensysteme über Plug-ins für den Datenaustausch über die Schnittstelle und/oder das Gateway gekoppelt sein.

Über die Schnittstelle und/oder das Gateway kann eine Warnmeldung zwischen den Autorensystemen kommuniziert und gegebenenfalls in einem Speicher, auf den die Autorensysteme zugreifen können, hinterlegt werden, wenn der Entwicklungsstand eines der Anteile über das zugeordnete Autorensystem geändert worden ist und eine Bewertung ergeben hat, dass diese Änderung eine Änderung des Entwicklungsstands eines anderen Anteils notwendig macht, um mindestens eine Einzelanforderungen an die zu entwickelnde mechatronische Komponente zu erfüllen. Dadurch kann erreicht werden, dass Änderungen des Entwicklungsstands eines ersten der Anteile unmittelbar an die Entwicklungsprozesse, beispielsweise an die Autorensysteme, weitergeleitet werden, um dort entsprechend berücksichtigt werden zu können. Darüber hinaus kann eine Bewertung dahingehend erfolgen, ob die jeweilige Änderung Einfluss auf die Entwicklung eines anderen Anteils hat, um so die Entwicklungsstandinformation für das jeweilig angesprochene Autorensystem besser verwertbar zu machen.

Die Einflussnahme auf die Entwicklungsprozesse der jeweils anderen Anteile durch die Veränderung des Entwicklungsstandes eines ersten Anteils kann weiterhin derart erfolgen, dass der Entwicklungsprozess des betreffenden Anteils so lange zurückgehalten wird, bis ein bestimmter Entwicklungsstand des die Entwicklungsstandinformation ausgebenden Anteils erreicht wird. Des Weiteren kann dann vorgesehen sein, dass der oder die Entwicklungsprozesse eingesetzt oder wieder aufgenommen werden, wenn ein bestimmter Entwicklungsstand des die Entwicklungsstandinformation betreffenden Anteils erreicht worden ist.

Das Verfahren kann weiterhin das Kommunizieren eines Anforderungsprofils oder einer Entwicklungsinstruktion an den Entwicklungsprozess eines zweiten der Anteile oder die Entwicklungsprozesse der beiden verbleibenden Anteile in Abhängigkeit eines endgültigen oder vorläufigen Entwicklungsergebnisses des ersten Anteils aufweisen.

Schließlich kann das Verfahren das Zwischenspeichern von Entwicklungsstandinformation in einem Zwischenspeicher, auf den die Entwicklungsprozesse zugreifen können, aufweisen, wobei eine Relevanzprüfung dahingehend stattfindet, ob eine jeweilige zwischengespeicherte Entwicklungsstandinformation eine Variation des Entwicklungsprozesses eines der Anteile bedingt oder nicht, und wobei nur solche Entwicklungsstandinformation zwischengespeichert wird, deren Relevanzprüfung ergeben hat, dass sie eine Variation des Entwicklungsprozesses bedingt.

Gemäß einem anderen Aspekt beschreibt die Erfindung eine Anordnung für die Entwicklung einer Baugruppe, die mindestens eine mechatronische Komponente aufweist, nach dem zuvor beschriebenen Verfahren. Dabei weist die Anordnung die Merkmale auf:
- ein erstes Computersystem, auf dem ein erstes Autorensystem zur Entwicklung eines ersten der Anteile installiert ist,
- ein zweites Computersystem, auf dem ein zweites Autorensystem zur Entwicklung eines zweiten der Anteile installiert ist, und
- ein drittes Computersystem, auf dem ein drittes Autorensystem zur Entwicklung eines dritten der Anteile installiert ist,
- eine Datenschnittstelle und/oder ein Gateway über die/das die Computersysteme untereinander verbunden sind und Entwicklungsstandinformation über die Anteile austauschen,
wobei jedes der Autorensysteme dazu vorbereitet ist, über die Datenschnittstelle und/oder das Gateway kommunizierte Entwicklungsstandinformation der jeweils anderen Autorensysteme auszugeben.

Die Autorensysteme können identische Autorensysteme sein, oder sie können disziplinspezifisch für die Entwicklung genau eines der Anteile ausgebildet sein. Mindestens eines der Autorensysteme kann auch disziplinübergreifend ausgebildet sein, oder zumindest für die Entwicklung von zwei der Anteile. Es können auch mindestens zwei Autorensysteme für die Entwicklung eines der Anteile vorgesehen sein.

Die Computersysteme können beispielsweise lokale PCs sein, auf denen als Autorensysteme ein jeweiliges auf den Entwicklungsprozess abgestimmtes Entwicklungssystem installiert ist, beispielsweise ein CAD-basiertes Programm. Über die Datenschnittstelle und/oder das Gateway können die Computersysteme untereinander kommunizieren und beispielsweise die Entwicklungsstandinformation austauschen. Dies ermöglicht es beispielsweise, dass bei der Entwicklung des mechanischen Anteils der jeweilige Entwicklungsstand des elektronischen Anteils berücksichtigt wird. Des Weiteren können Änderungen des Entwicklungsstands eines der Anteile an das jeweilige Autorensystem ausgegeben und dort beispielsweise für einen Benutzer erkennbar angezeigt werden.

Es kann weiterhin vorgesehen sein, dass die Autorensysteme über die Datenschnittstelle und/oder das Gateway für den Zugriff auf ein PDM- und/oder ein ERP-System verbunden sind.

Weitere Einzelheiten der Erfindung werden anhand der nachstehenden Figuren erläutert. Dabei zeigt:
- Figur 1: schematisch ein beispielhaftes Verfahren zur Entwicklung einer Baugruppe; und
- Figur 2: schematisch eine weitere Ausführungsform des erfindungsgemäßen Verfahrens.

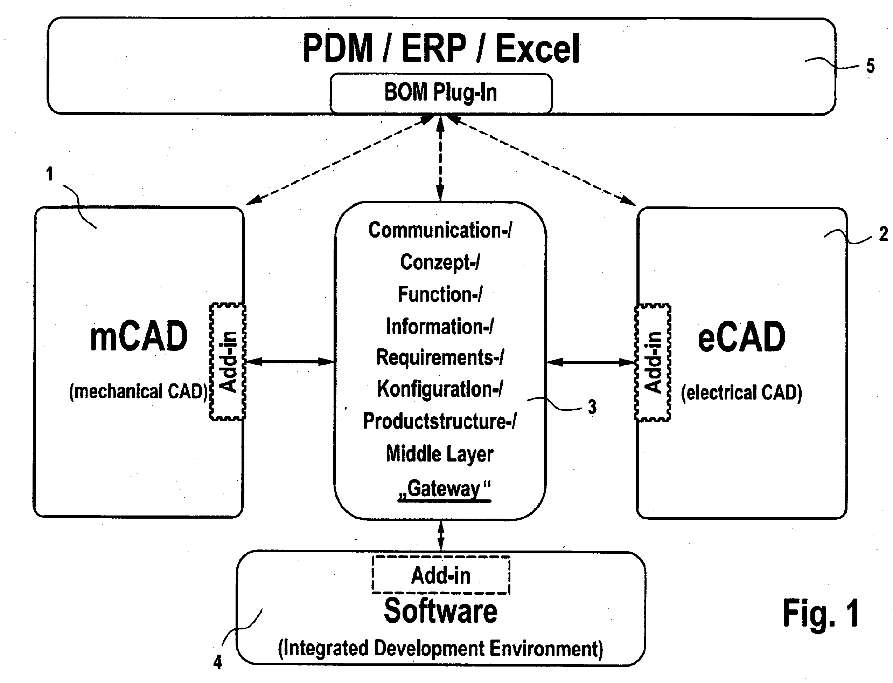

Bei dem in Figur 1 dargestellten Verfahren wird über unabhängige Autorensysteme 1, 2, 4 der mechanische Anteil, der elektronische Anteil und der informationstechnische Anteil der mechatronischen Komponente einer Baugruppe entwickelt. Während der Entwicklung der Anteile wird kontinuierlich eine jeweilige Entwicklungsstandinformation des jeweiligen Entwicklungsprozesses an ein Gateway 3 kommuniziert, über welches die Autorensysteme 1, 2, 4 kommunikativ miteinander in Verbindung stehen. Anhand der ausgetauschten Entwicklungsinformation können die Autorensysteme 1, 2, 4 Einfluss auf ihren jeweiligen Entwicklungsprozess nehmen. Dadurch wird erreicht, dass die von den unterschiedlichen Autorensystemen 1, 2, 4 entwickelten Anteile untereinander kompatibel sind. Weiterhin wird durch die parallelisierte Entwicklung der verschiedenen Anteile die Entwicklungszeit verkürzt.

Das Autorensystem 1 ist als ein mCAD-System für die Entwicklung des mechanischen Anteils ausgebildet, während das weitere Autorensystem 2 als ein eCAD-System für die Entwicklung des elektronischen Anteils ausgebildet ist. Das weitere Autorensystem 4 dient für die Entwicklung des informationstechnischen Anteils der mechatronischen Komponente.

Das Gateway 3 steht weiterhin mit einem Produktdatenmanagement-System (PDM-System) und/oder Enterprise-Resource-Planning-System (ERP-System) für den Austausch und die Hinterlegung entsprechender Daten in Verbindung. Die einzelnen Autorensysteme können unmittelbar mit dem PDM- und/oder ERP-System 5 oder mittelbar über das Gateway 3 mit diesem verbunden sein.

Das Gateway 3 ermöglicht verbesserte Kommunikation und verbesserte dokumentierte Prozesse in Entwicklungsprojekten innerhalb einzelner Engineering-Disziplinen aber auch insbesondere, wie im vorliegenden Fall, innerhalb der Projekte mit mehreren beteiligten Engineering-Disziplinen.

Kommunikation und Prozesse werden über eine disziplinneutrale Datenstruktur abgebildet. Diese Verbindung kann mittels bekannter Schnittstellen in alle gängigen Autorensysteme hinein integriert werden.

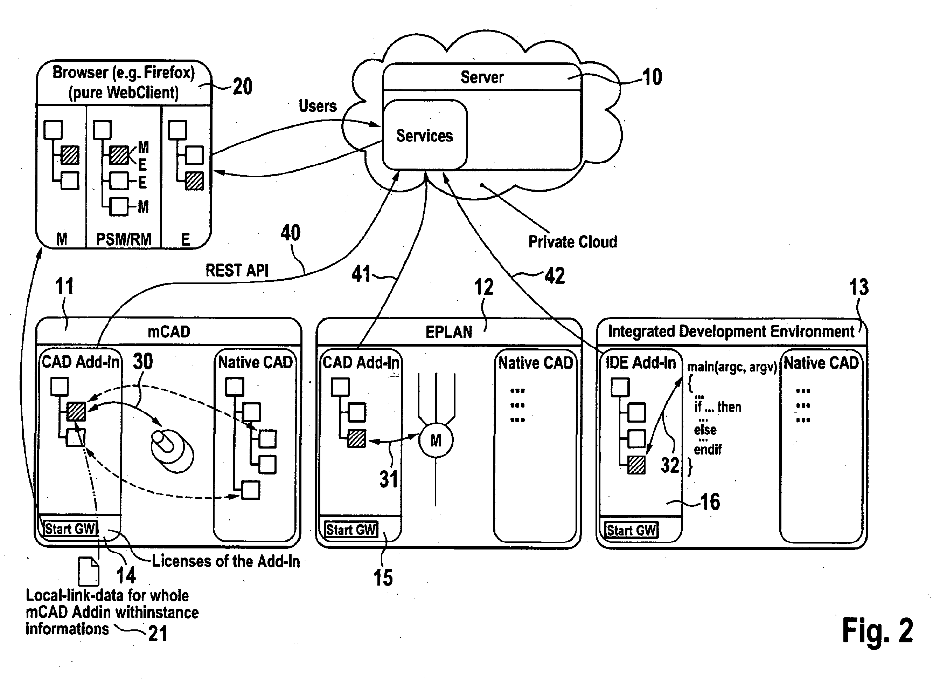

Die Figur 2 zeigt eine weitere Ausführungsform unter Anwendung eines beliebigen MCAD-Systems 11, eines ECAD-Systems 12 und einer beliebigen Softwareentwicklungsumgebung (13) als Autorensysteme. Die Kommunikation zwischen den Autorensystemen 11, 12, 13 ist über Webservices in einem Cloud-basierten Datenspeicher ausgebildet.

Über einen Webbrowser kann auch außerhalb der Autorensysteme 11, 12, 13 auf im Datenspeicher abgelegte Datenstruktur und Entwicklungsstandinformationen zugegriffen werden, was sowohl aus den Autorensystemen 11, 12, 13 oder auch direkt aus dem Browser eingeleitet werden kann. Durch den dezentralen Datenspeicher ist die Anordnung ortsungebunden und kann folglich über beliebige Lokationen hinweg aufgebaut werden.

Der Aufbau zeigt, wie Ausprägungen, Merkmale und/oder Attribute aus den einzelnen Autorensystemen 11, 12, 13 miteinander verknüpft, genseitig kommuniziert und über einen Datenspeicher bereitgestellt werden.

Es wird somit eine Cloud-basierte Gateway-Lösung in einer private Cloud gezeigt. Über ein PlugIn 14 im MCAD-System 11 werden CAD-Objekte wie z.B. Einzelteile und/oder Baugruppen mit der gemeinsamen mechatronischen Produktstruktur verknüpft.

Über die "REST API" 40 werden diese Verknüpfungen und die Zustandsinformationen an den Datenspeicher kommuniziert. Dabei können aus mechanischen Ausprägungsdetails auch Kenngrößen und Merkmale kommuniziert werden. Ebenfalls werden über die "REST API" 40, 41, 42 zyklisch (nahezu in Echtzeit) relevante Zustandsinformationen der anderen Disziplinen aus dem Gateway entgegengenommen.

In dem ECAD-System 12 "EPLAN" passiert nahezu das gleiche. Dort werden verbaute elektrotechnische Komponenten und/oder ganze Schaltungen mit der mechatronischen Struktur verknüpft. Gleiches in der Softwareentwicklungsumgebung 13. Hier werden Programme und Funktionen verknüpft.

Die Struktur, die Zustandsinformationen und Merkmale können auch außerhalb der Autorensysteme 11, 12, 13 und der Plugins angesehen und modifiziert werden. Hier in diesem Falle über einen Webbrowser 20. Über den Webbrowser 20 wir auch die mechatronische Struktur modelliert, die dann in den Autorensystemen 11, 12, 13 über die PlugIns zur Verknüpfung zur Verfügung steht.

Die Browserapplikation kann sowohl direkt im Browser oder über die PlugIns gestartet werden und beinhaltet alle Merkmale eines modernen Web UI's, aktuell basiert auf HTML5 Standards. Die Serverapplikation kann ein oder mehrere mechatronische Projekte mit deren Strukturen, Merkmalen und den mechatronischen Zustandsinformationen verwalten und speichern. Zusätzlich kann es vorkommen, dass die PlugIns in den Autorensystemen Zustandsinformationen zwischenspeichem und diese dann für den schnellen Zustandsabgleich zu nutzen (21).

Durch das Erzeugen der Verknüpfung 30, 31, 32 und das Kommunizieren dieser Zustandsinformationen können in den Autorensystemen 11, 12, 13 die PlugIns 14 ,15 ,16 und in der Webapplikation 20 die Zustandsinformationen aller Disziplinen dargestellt werden. Dies kann z.B. visuell, etwa in Form von Ampeln, Verknüpfungsikonen, Text, o.ä. geschehen.

In der Browser-Erweiterung kann eine Struktur angelegt werden, die innerhalb der Erweiterung der jeweiligen Disziplin dargestellt wird. Innerhalb der Erweiterung kann ein Element der jeweiligen Fachdisziplin zugeordnet werden. Dies kann z. B. eine 3D-Komponente im Mechanik-CAD, eine Schaltplanseite oder ein Schaltplanelement aus dem Elektro-CAD, bzw. ein Funktionsbaustein aus der Softwareentwicklung sein. Nach erfolgreicher Verknüpfung kann über die Kommunikationsfunktionalität der Erweiterung mit den anderen Disziplinen kommuniziert werden.

Innerhalb der Webbrowser Applikation kann diese Kommunikation nachvollzogen werden. Außerdem werden in einem sogenannten "Activity-Stream" alle Veränderungen dokumentiert. Der Status der einzelnen Disziplinen kann von der jeweiligen Erweiterung gewechselt werden. Auch der Status kann von den jeweils anderen Disziplinen eingesehen werden. Das heißt, dass z.B. ein Mechanikentwickler sehen kann, ob eine Anforderung von der Elektrotechnik bereits umgesetzt wurde.

Ein weiterer großer Nutzen wird mithilfe einer systemunabhängigen Betrachtungs-Funktion erreicht. Von jeder beliebigen Stelle der Applikation können die zugeordneten Elemente (z.B. Schaltplan, ein 3D-Bauteil, oder ein Softwarebaustein) betrachtet werden, ohne dass die jeweilige systemspezifische Software installiert sein muss. So kann der Softwareentwickler die Abbildung der 3D-Baugruppe einsehen, etwa um sie sich besser vorstellen zu können. Oder ein Mechaniker kann auch mal den Schaltplan eines Bauteils, beispielsweise einer Lichtschranke, anschauen, das er gerade verbauen will oder bereits verbaut hat.

Die der Erfindung zugrunde liegenden Prinzipien eigenen sich nicht nur für die Entwicklung mechatronischer Baugruppen, sondern sie eignen sich ganz allgemein auch für die Kommunikation, Zusammenarbeit und das Anforderungsmanagement innerhalb einer Disziplin z.B. in der Mechanikentwicklung. Es wird mehreren Konstrukteuren die Möglichkeit geboten, entlang einer Baugruppe zu kommunizieren, so dass von mehreren Konstrukteuren über jeweilige Autorensysteme in Echtzeit auf den Entwicklungsprozess Einfluss genommen werden kann.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Computerimplementiertes Verfahren zum Austausch von Entwicklungsständen zwischen Autorensystemen zur Entwicklung einer Baugruppe, die mindestens eine mechatronische Komponente mit einem mechanischen Anteil, einem elektrotechnischen Anteil und einem informationstechnischen Anteil aufweist, wobei ein erstes Autorensystem zum Entwickeln des mechanischen Anteils auf einem ersten Computersystem installiert ist, ein zweites Autorensystem zum Entwickeln des elektrotechnischen Anteils auf einem zweiten Computersystem installiert ist und ein drittes Autorensystem zum Entwickeln des informationstechnischen Anteils auf einem dritten Computersystem installiert ist, mit dem Ziel, Änderungen in einem der Anteile durch das eine Autorensystem im Wesentlichen ohne zeitliche Verzögerung an die anderen Autorensystem zur Entwicklung der anderen Anteile zu kommunizieren, wobei
- das erste Autorensystem ein erstes Plug-In, das zweite Autorensystem ein zweites Plug-In und das dritte Autorensystem ein drittes Plug-In aufweist, und
- die Plug-Ins der Autorensysteme über eine Schnittstelle oder ein Gateway gekoppelt sind,
wobei das Verfahren die Schritte aufweist:
- Verknüpfen von CAD-Objekten wie z.B. Einzelteilen und/oder Baugruppen mit einer gemeinsamen mechatronischen Produktstruktur durch das erste Plug-In, Verknüpfen von elektrotechnischen Komponenten und/oder ganzen Schaltungen mit der gemeinsamen mechatronischen Produktstruktur durch das zweite Plug-In und Verknüpfen von Programmen und Funktionen mit der gemeinsamen mechatronischen Produktstruktur durch das dritte Plug-In;
- kontinuierliches oder periodisches Kommunizieren durch das Plug-In eines der Autorensysteme von Entwicklungsstandinformationen des Autorensystems, Zustandsinformationen oder von bei dem Verknüpfen erzeugten Verknüpfungen an die Plug-Ins der jeweils anderen Autorensysteme über die Schnittstelle oder das Gateway; und
- Weiterleiten von durch das Plug-In eines Autorensystems erfassten Änderungen des Entwicklungsstands der anderen Autorensysteme an das eine Autorensystem.

2. Verfahren nach Anspruch 1, das weiterhin die Schritte aufweist:
- Erstellen eines Anforderungsprofils aus einer Mehrzahl Einzelanforderungen an die zu entwickelnde mechatronische Komponente;
- Qualifizieren jeder der Einzelanforderungen danach, ob sie Einfluss auf die Entwicklung des mechanischen Anteils, des elektrotechnischen Anteils, des informationstechnischen Anteils, oder mehrerer dieser Anteile hat; und
- Hinterlegen des Anforderungsprofils und eines Ergebnisses der Qualifizierung in einer Datenbank und Bereitstellen des Anforderungsprofils und des Qualifizierungsergebnisses jeweiligen Autorensystemen für die Entwicklung der Anteile über die Datenbank.

3. Verfahren nach Anspruch 2, bei dem in der Datenbank weiterhin ein Entwicklungsstand des mechanischen Anteils, des elektrotechnischen Anteils und/oder des informationstechnischen Anteils und eine Bewertung, ob der jeweilige Entwicklungsstand mindestens eine der Einzelanforderungen erfüllt, hinterlegt wird.

4. Computerimplementiertes Verfahren nach einem der vorangegangenen Ansprüche, bei dem über die Schnittstelle und/oder das Gateway eine Warnmeldung zwischen den Autorensystemen kommuniziert und gegebenenfalls in einem Speicher, auf den die Autorensysteme zugreifen können, hinterlegt wird, wenn der Entwicklungsstand eines der Anteile über das zugeordnete Autorensystem geändert worden ist und eine Bewertung ergeben hat, dass diese Änderung eine Änderung des Entwicklungsstands eines anderen Anteils notwendig macht, um mindestens eine Einzelanforderungen an die zu entwickelnde mechatronische Komponente zu erfüllen.

5. Computerimplementiertes Verfahren nach Anspruch 1, bei dem das Verändern des Entwicklungsstands des zweiten der Anteile oder der Entwicklungsstände der beiden verbleibenden Anteile das Zurückhalten dieses oder dieser Entwicklungsstände aufweist, bis ein bestimmter Entwicklungsstand des ersten Anteils erreicht ist, und das Einsetzen oder Wiederaufnehmen des Entwicklungsstands oder der Entwicklungsstände aufweist, wenn der bestimmte Entwicklungsstand erreicht ist.

6. Computerimplementiertes Verfahren nach Anspruch 1, das weiterhin das Kommunizieren eines Anforderungsprofils oder einer Entwicklungsinstruktion an das zweite Autorensystem oder die beiden verbleibenden Autorensysteme in Abhängigkeit eines endgültigen oder vorläufigen Entwicklungsstands des ersten Anteils aufweist.

7. Computerimplementiertes Verfahren nach Anspruch 1, wobei die Plug-Ins der Autorensysteme Zustandsinformationen Zwischenspeichern, um diese für einen schnellen Zustandsabgleich zu nutzen.

8. Anordnung für die Entwicklung einer Baugruppe, die mindestens eine mechatronische Komponente aufweist, nach dem Verfahren gemäß einem der vorangegangenen Ansprüche, wobei die Anordnung aufweist:
- ein erstes Computersystem, auf dem ein erstes Autorensystem zur Entwicklung eines ersten der Anteile installiert ist,
- ein zweites Computersystem, auf dem ein zweites Autorensystem zur Entwicklung eines zweiten der Anteile installiert ist, und
- ein drittes Computersystem, auf dem ein drittes Autorensystem zur Entwicklung eines dritten der Anteile installiert ist,
- eine Datenschnittstelle und/oder ein Gateway über die/das die Computersysteme untereinander verbunden sind und Entwicklungsstandinformation über die Anteile austauschen,
wobei jedes der Autorensysteme dazu vorbereitet ist, über die Datenschnittstelle und/oder das Gateway kommunizierte Entwicklungsstandinformation der jeweils anderen Autorensysteme auszugeben.

9. Anordnung nach Anspruch 8, bei der die Autorensysteme über die Datenschnittstelle und/oder das Gateway weiterhin für den Zugriff auf ein PDM- und/oder ein ERP-System verbunden sind.

## Claims

1. Computer-implemented method for exchanging development statuses between authoring systems for developing an assembly which has at least one mechatronic component with a mechanical portion, an electrotechnical portion and an information technology portion, a first authoring system for developing the mechanical portion being installed on a first computer system, a second authoring system for developing the electrotechnical portion is installed on a second computer system, and a third authoring system for developing the information technology portion is installed on a third computer system, with the aim of communicating changes in one of the portions by the one authoring system substantially without time delay to the other authoring systems for the development of the other portions, wherein
- the first authoring system has a first plug-in, the second authoring system has a second plug-in, and the third authoring system has a third plug-in, and
- the plug-ins of the authoring systems are coupled via an interface or gateway,
the method comprising the steps of:
- Linking CAD objects such as individual parts and/or assemblies to a common mechatronic product structure by means of the first plug-in, linking electrotechnical components and/or entire circuits to the common mechatronic product structure by means of the second plug-in, and linking programs and functions to the common mechatronic product structure by means of the third plug-in;
- Continuously or periodically communicating, by the plug-in of one of the authoring systems, authoring system development status information, state information, or links generated in the linking, to the plug-ins of each of the other authoring systems via the interface or gateway; and
- Forwarding changes in the development state of the other authoring systems detected by the plug-in of one authoring system to the one authoring system.

2. The method of claim 1, further comprising the steps of:
- Creating a requirements profile from a plurality of individual requirements for the mechatronic component to be developed;
- Qualifying each of the individual requirements as to whether it influences the development of the mechanical component, the electrical component, the information component, or more than one of these components; and
- Storing the requirements profile and a result of the qualification in a database and providing the requirements profile and the qualification result to respective authoring systems for development of the portions via the database.

3. The method according to claim 2, in which a development status of the mechanical portion, the electrotechnical portion and/or the information technology portion and an assessment of whether the respective development status fulfils at least one of the individual requirements is further stored in the database.

4. The computer-implemented method according to any one of the preceding claims, in which a warning message is communicated between the authoring systems via the interface and/or the gateway and, if appropriate, is stored in a memory which can be accessed by the authoring systems if the development status of one of the portions has been changed via the associated authoring system and an assessment has shown that this change necessitates a change in the development status of another portion in order to fulfil at least one individual requirement for the mechatronic component to be developed.

5. The computer-implemented method of claim 1, wherein changing the state of development of the second of the portions, or the states of development of the remaining two portions, comprises withholding that or those states of development until a particular state of development of the first portion is reached, and comprising initiating or resuming the state or states of development when the particular state of development is reached.

6. The computer-implemented method of claim 1, further comprising communicating a requirement profile or development instruction to the second authoring system or the remaining two authoring systems in dependence on a final or provisional development state of the first portion.

7. The computer-implemented method of claim 1, wherein the plug-ins of the authoring systems cache state information for use in rapid state alignment.

8. An arrangement for developing an assembly comprising at least one mechatronic component according to the method of any one of the preceding claims, the arrangement comprising:
- a first computer system on which a first authoring system is installed for developing a first one of the portions,
- a second computer system having installed thereon a second authoring system for developing a second of said portions; and
- a third computer system having installed thereon a third authoring system for developing a third of said portions,
- a data interface and/or gateway through which said computer systems are interconnected and exchange development status information about said portions,
wherein each of the authoring systems is adapted to output development status information of the other authoring systems communicated via the data interface and/or the gateway.

9. The arrangement of claim 8, wherein the authoring systems are further connected via the data interface and/or the gateway for access to a PDM and/or an ERP system.

## Revendications

1. Procédé implémenté par ordinateur pour l'échange de stades de développement entre des systèmes auteurs pour le développement d'un sous-ensemble, qui comprend au moins un composant mécatronique avec une partie mécanique, une partie électrotechnique et une partie informatique, dans lequel un premier système auteur est installé pour le développement de la partie mécanique sur un premier système d'ordinateur, un deuxième système auteur est installée pour le développement de la partie électrotechnique sur un deuxième système d'ordinateur et un troisième système auteur est installé pour le développement de la partie informatique sur un troisième système d'ordinateur, avec pour objectif de communiquer, globalement sans délai, les changements effectués dans une des parties par le système auteur aux autres systèmes auteurs pour le développement des autres parties, dans lequel
- le premier système auteur comprend un premier plug-in, le deuxième système auteur comprend un deuxième plug-in et le troisième système auteur comprend un troisième plug-in et
- les plug-ins des systèmes auteurs sont couplés par l'intermédiaire d'une interface ou d'une passerelle,
dans lequel le procédé comprend les étapes suivantes :
- association d'objets CAO, par exemple des pièces individuelles et/ou des sous-ensembles, avec une structure de produit mécatronique commune, par le premier plug-in, association de composants électrotechniques et/ou de circuits complets avec la structure de produit mécatronique commune par le deuxième plug-in et association de programmes et de fonctions avec la structure de produit mécatronique commune par le troisième plug-in ;
- communication continue ou périodique par le plug-in d'un des systèmes auteurs d'informations de développement du système auteur, d'informations d'état ou d'associations générées lors de l'association, au plug-in des autres systèmes auteurs par l'intermédiaire de l'interface ou de la passerelle ; et
- transmission au système auteur des changements, détectés par le plug-in d'un système auteur, du stade de développement des autres systèmes auteurs.

2. Procédé selon la revendication 1, qui comprend en outre les étapes suivantes :
- création d'un profil de changement à partir d'une pluralité d'exigences individuelles concernant le composant mécatronique à développer ;
- qualification de chacune des exigences individuelles, selon qu'elle influe sur le développement de la partie mécanique, de la partie électrotechnique, de la partie informatique ou plusieurs de ces parties ;
- enregistrement du profil de changement et d'un résultat de la qualification dans une base de données et mise à disposition du profil de changement et du résultat de qualification de systèmes auteurs respectifs pour le développement des parties par l'intermédiaire de la base de données.

3. Procédé selon la revendication 2, dans lequel, dans la base de données, est enregistré en outre un stade de développement de la partie mécanique, de la partie électrotechnique et/ou de la partie informatique et une estimation si le stade de développement respectif satisfait au moins une des exigences individuelles.

4. Procédé implémenté par un ordinateur selon l'une des revendications précédentes, dans lequel, par l'intermédiaire de l'interface et/ou de la passerelle, un message d'avertissement est communiqué entre les systèmes auteurs et, le cas échéant, enregistré dans une mémoire auquel les systèmes auteurs peuvent accéder, lorsque le stade de développement d'une des parties a été changée par le système auteur principal et s'il en a résulté une estimation que ce changement rend nécessaire un changement du stade de développement d'une autre partie, afin de satisfaire au moins une exigence individuelle concernant le composant mécatronique à développer.

5. Procédé implémenté par un ordinateur selon la revendication 1, dans lequel la modification du stade de développement de la deuxième partie ou du deuxième stade de développement des deux parties restantes comprend la rétention de ce ou ces stades de développement jusqu'à ce qu'un stade de développement déterminé de la première partie soit atteint et comprend l'insertion ou le réenregistrement du stade de développement ou des stades de développement lorsque le stade de développement déterminé est atteint.

6. Procédé implémenté par un ordinateur selon la revendication 1, qui comprend en outre la communication d'un profil de changement ou d'une instruction de développement au deuxième système auteur ou au deux systèmes auteurs restants en fonction d'un stade de développement définitif ou provisoire de la première partie.

7. Procédé implémenté par un ordinateur selon la revendication 1, dans lequel les plug-ins des systèmes auteurs enregistrent des informations d'état afin d'utiliser ceux-ci pour une comparaison rapide d'états.

8. Disposition pour le développement d'un sous-ensemble, qui comprend au moins un composant mécatronique, selon le procédé selon l'une des revendications précédentes, dans laquelle la disposition comprend :
- un premier système d'ordinateur, sur lequel est installé un premier système auteur pour le développement d'une première partie,
- un deuxième système d'ordinateur, sur lequel est installé un deuxième système auteur pour le développement d'une deuxième partie et
- un troisième système d'ordinateur, sur lequel est installé un troisième système auteur pour le développement d'une troisième partie,
- une interface de données et/ou une passerelle par l'intermédiaire de laquelle les systèmes d'ordinateurs sont reliés entre eux et échangent des informations de stades de développement concernant les parties,
dans lequel chacun des systèmes auteurs est préparé pour sortir les informations de stades de développement des autres systèmes auteurs, communiquées par l'intermédiaire de l'interface de données et/ou de la passerelle.

9. Disposition selon la revendication 8, dans laquelle les systèmes auteurs sont reliés par l'intermédiaire de l'interface de données et/ou de la passerelle en outre pour l'accès à un système PDM et/ou ERP.
